# EUROPÄISCHE PATENTSCHRIFT

(11) **EP 2 619 834 B1**
(45) Veröffentlichungstag und Bekanntmachung des Hinweises auf die Patenterteilung: **25.03.2015**
(21) Anmeldenummer: 11818911.7
(22) Anmeldetag: 23.09.2011
(51) Int. Cl.: H01M 8/12, H01M 4/88, H01M 8/02, G01N 27/409, C25B 1/04, H01M 8/10

(54) **VERFAHREN ZUR HERSTELLUNG VON FESTOXIDBRENNSTOFFZELLEN MIT EINER METALLSUBSTRATGETRAGENEN KATHODEN-ELEKTROLYT-ANODEN-EINHEIT SOWIE DEREN VERWENDUNG**
METHOD FOR PRODUCING SOLID OXIDE FUEL CELLS HAVING A CATHODE-ELECTROLYTE-ANODE UNIT BORNE BY A METAL SUBSTRATE, AND USE OF SAID SOLID OXIDE FUEL CELLS
PROCÉDÉ POUR LA FABRICATION DE PILES À COMBUSTIBLE À OXYDE SOLIDE COMPORTANT UNE UNITÉ CATHODE-ÉLECTROLYTE-ANODE PORTÉE PAR UN SUBSTRAT MÉTALLIQUE, AINSI QUE L'UTILISATION DESDITES PILES À COMBUSTIBLE À OXYDE SOLIDE

(30) Priorität: 24.09.2010 DE 102010046146
(43) Veröffentlichungstag der Anmeldung: 31.07.2013
(73) Patentinhaber: FRAUNHOFER-GESELLSCHAFT zur Förderung der angewandten Forschung e.V., 80636 Munich (DE); Technische Universität Dresden, 01069 Dresden (DE)
(72) Erfinder: KUSNEZOFF, Mihails, 01309 Dresden (DE); TROFIMENKO, Nikolai, 01069 Dresden (DE); DIETZEN, Egle, 01099 Dresden (DE); BELDA, Chriffe, 01159 Dresden (DE)
(74) Vertreter: Pfenning, Meinig & Partner GbR
(86) Internationale Anmeldenummer: PCT/DE2011/001821
(87) Internationale Veröffentlichungsnummer: WO 2012/062263

(56) Entgegenhaltungen:
- WO-A1-2008/064938
- DE-B4-102006 001 552
- HUANG ET AL: "Polarization analysis for metal-supported SOFCs from different fabrication processes", JOURNAL OF POWER SOURCES, ELSEVIER SA, CH, Bd. 177, Nr. 2, 5. Dezember 2007 (2007-12-05), Seiten 339-347, XP022450278, ISSN: 0378-7753, DOI: 10.1016/J.JPOWSOUR.2007.11.092
- HUI ET AL: "Metal-supported solid oxide fuel cell operated at 400-600<o>C", JOURNAL OF POWER SOURCES, ELSEVIER SA, CH, Bd. 167, Nr. 2, 17. April 2007 (2007-04-17), Seiten 336-339, XP022032212, ISSN: 0378-7753, DOI: 10.1016/J.JPOWSOUR.2007.02.070

## Beschreibung

Die Erfindung betrifft ein Verfahren zur Herstellung von Festoxidbrennstoffzellen (SOFC) mit einer metallsubstratgetragenen Kathoden-Elektrolyt-Anoden-Einheit, nachfolgend auch als KEA bezeichnet und Verwendungen dafür.

Neben anderen Kathoden-Elektrolyt-Anoden-Einheiten, bei denen die mechanische Festigkeit und Stabilität im Wesentlichen mit dem entsprechend ausgebildeten Elektrolyten erreicht wird, sind sogenannte metallgetragene SOFC's bekannt, die in englischer Sprache auch Metal Supported Cell (MSC) bezeichnet werden. Dabei soll ein kostengünstiger metallischer Träger für die dünnen elektrochemisch wirksamen Schichten der KEA genutzt werden. Bekanntermaßen weisen Metalle günstigere mechanische Eigenschaften, wie eine höhere sen metallischen Substrats nicht mehr sicher gewährleistet und thermische Spannungen nicht ausreichend kompensiert werden. Da es aber gewünscht ist, die Festigkeit der Kathoden-Elektrolyt-Anoden-Einheit im Wesentlichen durch das metallische Substrat zu erreichen und neben den elektrochemisch aktiven Schichten der KEA auch weitere Zwischenschichten möglichst dünn zu halten, ist diese bekannte technische Lösung hinzu geringeren Substratdicken limitiert.

Da aber der Elektrolyt einer SOFC möglichst vollständig gasdicht sein soll, muss ein weiteres Problem beachtet werden, wenn die Herstellung des Elektrolyten über einen Sinterprozess erfolgen soll. Bei den hierfür eingesetzten keramischen Werkstoffen sind Sintertemperaturen im Bereich 1300 °C bis 1500 °C erforderlich, was auch bei relativ dünnen Elektrolytschichten kleiner 100 µm der Fall ist. Alle anderen Werkstoffe, mit denen Schichten und auch die KEA gebildet sind, erfordern aber für ihre Sinterung deutlich kleinere Temperaturen. In Folge dieser sehr hohen Sintertemperatur verschärft sich das durch die unterschiedlichen thermischen Ausdehungskoeffizienten und auch durch die Schwindung, insbesondere der Elektrolytschicht, beim Sintern hervorgerufene Problem weiter.

Besonders kritisch ist die Rissbildung in der Elektrolytschicht, die beim Sintern auf einer rigiden Unterlage auftritt.

Die Druckschrift WO 2008/064938 A1 offenbart auch ein Verfahren zur Herstellung von Festoxidbrennstoffzellen mit einer metallsubstratgetragenen Kathoden-Elektrolyt-Anodeneinheit (KEA). Die Oberfläche der KEA wird auf einer Oberfläche eines porösen ferritischen Metallsubstrats auf eine eine Anode bildende NiO/YSZ-Schicht nasschemisch aufgebracht. Das beschichtete Substrat wird bei einer ersten Wärmebehandlung bei 1250 °C gesintert. Auch die gesinterte Anode bzw. die gebildete Schicht wird eine den Elektrolyten bildende Schicht mittels thermischen Spritzens flächig aufgebracht und im Anschluss daran auf den die den Elektrolyten bildende Schicht eine weitere die Kathode bildende Schicht nasschemisch aufgebracht. Bei einer weiteren Wärmebehandlung bei Temperaturen unter 1000 °C werden diese Schichten gesintert und stoffschlüssig mit dem Elektrolyten verbunden.

Es ist daher Aufgabe der Erfindung Festoxidbrennstoffzellen zur Verfügung zu stellen, die eine erhöhte Festigkeit, verbesserte Temperaturwechselbeständigkeit, eine sichere Haftung von die Kathoden-Elektrolyt-Anoden-Einheit bildenden Schichten erreichen, eine rissfrei und gasdichte Elektrolytschicht aufweisen und die verzugsfrei und reproduzierbar herstellbar sind.

Erfindungsgemäß wird diese Aufgabe mit einem Verfahren, das die Merkmale des Anspruchs 1 aufweist, gelöst. Verwendungen sind im Anspruch 10 genannt. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren zur Herstellung von Festoxidbrennstoffzellen mit einer metallsubtratgetragenen Kathoden-Elektrolyt-Anoden-Einheit (KEA) wird zuerst auf eine Oberfläche eines porösen, metallischen Substrats, als Träger der Kathoden-Elektrolyt-Anoden-Einheit, eine die Anode bildende Schicht nasschemisch aufgebracht. Das metallische Substrat ist dabei bevorzugt planar.

Auf diese die Anode bildende Schicht wird ein bereits vorab gasdicht gesintertes plattenförmiges Element, das den Elektrolyten bildet, flächig aufgelegt und im Anschluss daran eine erste Wärmebehandlung bis zu einer maximalen Temperatur von 1250 °C durchgeführt. Dabei werden zuerst die in der die Anode bildenden Schicht enthaltenen organischen Komponenten (z.B. Binder, Plastifizierer, Porenbildner) ausgetrieben, was üblicherweise bis zum Erreichen einer Temperatur von ca. 500 °C erfolgt ist. Bei höheren Temperaturen wird diese Schicht dann gesintert und dabei wird eine stoffschlüssige Verbindung zwischen Substrat und Elektrolyt hergestellt. Die Anode und der Elektrolyt sind dann vollflächig miteinander verbunden.

Im Anschluss daran wird auf den Elektrolyten eine weitere die Kathode bildende Schicht nasschemisch aufgebracht und bei einer weiteren Wärmebehandlung bei Temperaturen unterhalb 1000 °C gesintert. Diese Wärmebehandlung kann bei der ersten Inbetriebnahme, also quasi in situ, ohne einen zusätzlichen Wärmebehandlungsschritt durchgeführt werden. Danach ist die Kathode stoffschlüssig mit dem Elektrolyten verbunden.

Unter nasschemischen Auftrag können Verfahren, wie Siebdruck, Nasspulverspritzen, Roll-Coating, Aerosoldruck oder Foliengießen verstanden werden. Vor dem Auflegen des bereits gasdicht gesinterten plattenförmigen Elektrolyten ist keine Trocknung der die Anode bildenden Schicht erforderlich. Ein gewisses Maß an Restviskosität wirkt sich sogar vorteilhaft aus. Der Elektrolyt kann dabei mit leichtem Druck auf die die Anode bildende Schicht aufgelegt und dabei sollen Lufteinschlüsse vermieden werden.

Insbesondere bei einer Nickel enthaltenden Anode sollte zwischen dem metallischen Substrat und der die Anode bildenden Schicht eine eine Diffusion vermeidende Zwischenschicht nasschemisch aufgebracht und ebenfalls der ersten Wärmebehandlung unterzogen werden. Mit einer solchen Zwischenschicht kann eine Interdiffusion von Nickel in den metallischen Substratwerkstoff und bei einem metallischen Substrat, das z.B. aus einer Eisen-Chrom-Legierung gebildet ist, eine Interdiffusion von Eisen und Chrom in den Anodenwerkstoff vermieden werden.

Die Zwischenschicht, die die Anode bildende Schicht und die die Kathode bildende Schicht sollten jeweils mit einer Schichtdicke ≤ 60 µm aufgetragen werden, so dass diese Schichtdicke unmittelbar nach dem Auftrag nicht überschritten ist. Durch die beim Sintern hervorgerufene Schwindung weisen diese Schichten nach Fertigstellung der KEA noch weiter reduzierte Schichtdicken auf.

Ein gesinterter bevorzugt plattenförmiger Elektrolyt sollte mit einer Dicke ≤ 50 µm, bevorzugt ≤ 45 µm eingesetzt werden. Dabei sollte eine Dichte > 96 %, bevorzugt > 99 % der theoretischen Dichte erreicht werden. Der Elektrolyt sollte dabei für ein Oxidationsmittel oder einen Brennstoff bei Betriebstemperatur der Festoxidbrennstoffzelle vollständig gasdicht sein.

Ein bei der Erfindung einsetzbares gesintertes metallisches Substrat sollte aus einer Eisen-Chrom-Legierung mit mindestens 15 Masse-%, bevorzugt mindestens 18 Masse-% Chrom gebildet sein. Dadurch weist es einen thermischen Ausdehnungskoeffizienten im Bereich 10 * 10⁻⁶K⁻¹ bis 13,5 * 10⁻⁶K⁻¹ auf. Dieser entspricht dem thermischen Ausdehnungskoeffizienten des gesinterten Elektrolyten, so dass Spannungen bei wechselnden Temperaturen zwischen metallischem Substrat und Elektrolyt und auch Verformungen vermieden werden können. Die Porosität sollte mindestens 30 %, bevorzugt 50 % und besonders bevorzugt 60 % betragen. Die Schichtdicke sollte oberhalb 200 µm bis zu maximal 1 mm liegen.

Zwischen der die Anode bildenden Schicht und dem Elektrolyten kann eine Anodenkontaktschicht, nasschemisch aufgebracht und ebenfalls der ersten Wärmebehandlung unterzogen werden. Deren Schichtdicke sollte im Grünzustand nach dem nasschemischen Auftrag ≤ 15 µm sein. Diese Anodenkontaktschicht kann auch aus dem Anodenwerkstoff gebildet sein, dabei jedoch einen höheren Anteil an sinteraktivem pulverförmigem Elektrolytwerkstoff mit der Zusammensetzung Zr₁₋ₓMeₓO_{2-δ} enthalten. Auf diese Anodenkontaktschicht kann dann der plattenförmige Elektrolyt vor der ersten Wärmebehandlung aufgelegt werden. Mit dieser Anodenkontaktschicht kann die Haftung zwischen Anode und Elektrolyt sowie die damit verbundene Redox- und Thermoschockstabilität einer Brennstoffzelle verbessert werden.

Die die Anode bildende Schicht kann aus Ni/Ce_{1-x-y}MeₓMa_{y}O_{2-δ}, Ni/Zr₁₋ₓMeₓO_{2-δ} Cermet mit Me als Seltenerdmetall und Ma als katalytisch wirksamem Metall oder einer Mischung bestehend aus Ce_{1-x-y}MeₓMa_{y}O_{2-δ} und (La,Ca)(Ti,Cr,Ru)O₃ und/oder TiC oder (Y,Sr)TiO₃ Hergestellt werden. Beispiele für geeignete katalytisch wirkende Metalle sind Nickel, Kupfer und Cobalt. Geeignete Seltenerdmetalle sind Y, Sm, Gd, Sc, Pr, Nd bzw. alle Lanthanoiden.

Dabei sind x = 0 bis 0,2, y = 0 bis 0,2 und δ = 0 bis 0,1

Der Elektrolyt kann aus vollstabilsiertem Zirkonoxid, das mit Scandium, Yttrium oder Scandium/Ceria stabilisiert ist, gebildet sein.

Er wird bei einem Sinterprozess, der vor der ersten Wärmebehandlung durchgeführt wird, hergestellt.

Die Kathode kann aus La_{0,6}Sr_{0,4}Fe_{0,8}CO_{0,2}O_{3-δ} gebildet werden, wobei δ = 0 bis 0,1 ist.

Zwischen Elektrolyt und der die Kathode bildenden Schicht kann eine CeO₂ enthaltende weitere Zwischenschicht ebenfalls nasschemisch aufgebracht und der ersten Wärmebehandlung unterzogen werden. Diese auf dotiertem CeO₂ basierende Zwischenschicht verhindert eine Bildung von SrZrO₃, was bei einem zunehmenden Verhältnis Sr/La im Kathodenmaterial auftreten kann.

Auf der der KEA gegenüberliegenden Oberfläche des metallischen Substrats kann eine Schicht nasschemisch aufgebracht werden, die unter reduzierenden Bedingungen elektronisch leitend und porös ist. Diese Schicht kann aus (La,Ca)(Ti,Cr,Ru)O₃ und/oder TiC und/oder (Y,Sr)TiO₃ gebildet sein.

Mit dieser Schicht können mechanische Spannungen, die zu Verformungen der Kathoden-Elektrolyt-Anoden-Einheit mit dem metallischen Substrat führen können, zumindest soweit reduziert werden, dass keine oder eine vernachlässigbare Verformung oder eine Delamination der elektrochemisch aktiven Schichten der KEA bei Temperaturwechseln vermieden werden können.

Die erste Wärmebehandlung kann vorteilhaft in reduzierender Wasserstoffatmosphäre bei Temperaturen unterhalb von 1250 °C durchgeführt und dabei alle bereits aufgetragenen Schichten gemeinsam im so genannten Cofiring gesintert. Durch diese relativ geringe Maximaltemperatur wird die Mikrostruktur der Anodenschicht nahezu nicht verändert, was insbesondere das Kornwachstum (Vergröberung der katalytisch wirkenden Nickelpartikeln) betrifft. Es lassen sich größere Porositäten in den Schichten einfacher ausbilden, da die Sinterung temperaturbedingt nicht zum Dichtsintern führt. Wechselwirkungen zwischen den Schichtwerkstoffen können vermieden bzw. deutlich reduziert und eine Bildung von Pyrochlorphasen entscheidend verringert oder vollständig unterbunden werden. Es können auch Veränderungen des metallischen Substratwerkstoffs in seiner Zusammensetzung und des Gefüges minimiert werden.

Mit dem erfindungsgemäßen Verfahren kann eine ausreichend auch bei verschiedenen Temperaturen stabile Kathoden-Elektrolyt-Anoden-Einheit, die auf einem metallischen Substrat ausgebildet ist, erhalten werden. Alle Schichten weisen dabei eine gute Haftung auf und es treten keine Delaminationen auf. Insbesondere durch den Einsatz des bereits gesinterten Elektrolyten bei der Herstellung, können Verformungen bei wechselnden Temperaturen vermieden werden.

Mit der Erfindung kann die erforderliche chemische Beständigkeit auf der Anodenseite eingehalten werden. Die Herstellung kann in definierter Geometrie, mit definierter Mikro- und Porenstruktur reproduzierbar erfolgen. Eine unerwünschte Bildung von Nebenphasen, insbesondere bei der Wärmebehandlung kann vermieden werden.

Durch das metallische Substrat, das den größten Anteil an Volumen und Masse ausmacht, kann wegen dessen guter Wärmeleitfähigkeit die Zeit bis zum Erreichen der erforderlichen Betriebstemperatur der SOFC in der Startphase deutlich verkürzt werden.

Der Energiebedarf bei der Herstellung kann reduziert werden, da bei der ersten Wärmebehandlung für die Sinterung kleinere Temperaturen erforderlich sind und bei der gesondert durchzuführenden Sinterung der Elektrolyten kleinere Massen gesintert werden müssen.

Es können metallsubstratgetragene Kathoden-Elektrolyt-Anoden-Einheiten in verschiedenen Dimensionierungen beispielsweise mit einer Fläche von 100 cm² hergestellt werden. Dabei können entsprechend dimensionierte Substrate und Elektrolyte als Halbzeug eingesetzt werden.

Da aus Langzeitstabilitätsgründen Metallsubstrate bei hoher Temperatur vorgesintert sind und danach keine Schwindung mehr zeigen, ist ein wesentliches Problem gelöst worden.

Es hat sich überraschend auch herausgestellt, dass die metallsubtsratgetragene Kathoden-Elektrolyt-Anodeneinheit auch für die Festoxid-Elektrolyse oder als Sensor verwendet werden kann. Dabei kann sie auch als Sauerstoffsensor verwendet werden.

Nachfolgend soll die Erfindung beispielhaft näher erläutert werden.

Dabei zeigt:

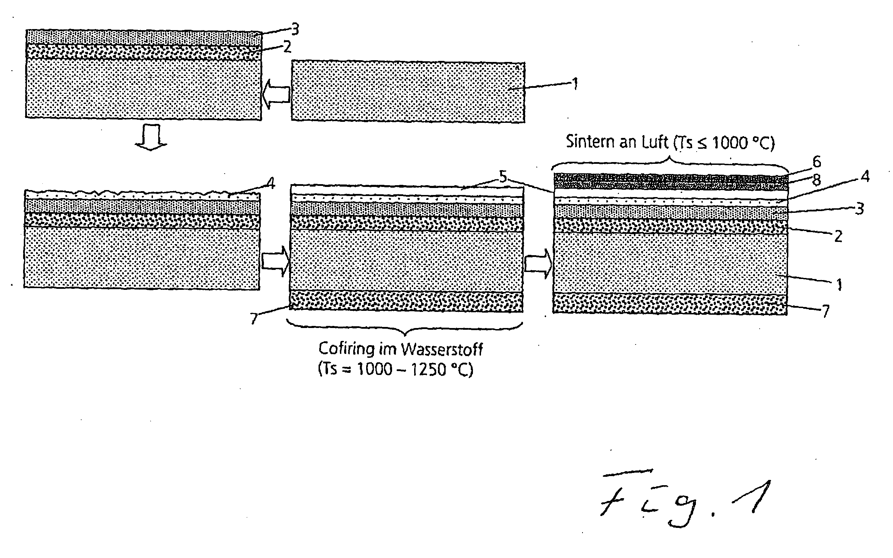

Figur 1 die Herstellung in mehreren Stufen, mit dem schichtweisen Auftrag auf ein metallisches Substrat sowie dem Auflaminieren des gesinterten Elektrolyten.

Nachfolgend soll die Erfindung beispielhaft erläutert werden.

Dabei zeigt die Figur 1 die Herstellung einer metallsubstratgetragenen Kathoden-Elektrolyt- Anoden-Einheit in mehreren Schritten.

Auf ein Oberfläche eines porösen metallischen Substrats 1, das eine Dicke ≤ 1 mm aufweist und das aus einer Eisen-Chrom-Legierung (Masseanteil an Chrom 18%) gebildet ist, wird eine eine Diffusion vermeidende Zwischenschicht 2 mittels Siebdruck aufgebracht. Die Zwischenschicht hat eine Dicke ≤ 60 µm und besteht aus La_{0,47}Ca_{0,4}Cr_{0,2}Ti_{0,8}O₃. Der Feststoffanteil in der für den Siebdruck eingesetzten Paste wird dabei so gewählt, dass die aufgedruckte Zwischenschicht 2 die Porenstruktur des Substrats 1 abdeckt und nach einer Wärmebehandlung eine gute Haftung der Zwischenschicht 2 auf dem metallischen Substrat 1 erreicht ist; wobei weiter eine poröse gasdurchlässigen Struktur vorhanden ist.

Nach dem Trocknen der Zwischenschicht 2 bei einer Temperatur ≤ 200 °C wird eine weitere Schicht, die die Anode 3 bildet, aus NiO-8YSZ-Cermet, das bis zu 50 Masse-% La_{0,47}Ca_{0,4}Cr_{0,2}Ti_{0,8}O₃ beinhaltet in pastöser Konsistenz ebenfalls durch Siebdrucken mit einer Schichtdicke ≤ 60 µm auf die Zwischenschicht 2 aufgebracht und getrocknet. Auch hier wird der Feststoffanteil in der für den Siebdruck eingesetzten Paste so gewählt, dass nach einer Wärmebehandlung eine gasdurchlässige Porenstruktur vorhanden ist. Außerdem soll eine Perkolation der überwiegend elektrisch leitenden Bestandteile (Ni, La_{0,47}Ca_{0,4}Cr_{0,2}Ti_{0,8}O₃) sowie der ionisch leitenden Bestandteile (8 mol-% Y₂O₃-dotiertes ZrO₂ - 8YSZ) erreicht werden.

Nach dem Trocknen der die Anode 3 bildenden Schicht wird eine dünne ≤ 20 µm Haftvermittlerschicht als Anodenkontaktschicht 4 ebenfalls durch Siebdrucken auf die die Anode 3 bildende Schicht aufgetragen. Diese weist einen kleineren Anteil (≤ 40 Vol.-%) an NiO gegenüber der die Anode 3 bildenden Schicht auf und enthält ein sinteraktives 8YSZ-Pulver.

Im Anschluss an den Siebdruck der die Anodenkontaktschicht 4 bildenden Schicht wird das vorab bereits gasdicht gesinterte Halbzeug für den Elektrolyten 5, das aus 3 mol.-% Y₂O₃-dotiertem ZrO₂ besteht, auf diese noch feuchte und viskose Anodenkontaktschicht 4 vollflächige aufgelegt. Dabei kann der Elektrolyt 5 in einem Winkel ausgehend von einer Kante den Winkel sukzessive verkleinernd langsam gegen die Oberfläche der Anodenkontaktschicht 4 verschwenkt werden, um insbesondere Lufteinschlüsse zu vermeiden. Der Elektrolyt 5 hat eine Dicke ≤ 50 µm.

Für eine bessere und insbesondere einfacher herstellbare Verbindung von Schicht und Substrat 1 kann die noch feuchte Zwischenschicht 2 mit dem Substrat 1 auf den Elektrolyten 5 aufgelegt werden, um die mechanische Belastung des dünnen Elektrolyten 5 so klein, wie möglich zu halten. Dadurch vereinfacht sich die Handhabbarkeit und es können Herstellungsfehler besser vermieden werden.

Nach dem Auflegen des Elektrolyten 5 auf die noch feuchte Anodenkontaktschicht 4 wird der gesamte bisher erhaltene Mehrschichtaufbau getrocknet. Die einzelnen Schichten und der Elektrolyt 5 bilden dann bereits eine für eine Handhabung ausreichend festen Verbund.

Auf die bis dahin noch freie Oberfläche des metallischen Substrats 1 wird dann mindestens eine Schicht 7 aus La_{0,47}Ca_{0,4}Cr_{0,2}Ti_{0,8}O₃ ebenfalls durch Siebdrucken aufgetragen und getrocknet. Diese Schicht 7 weist im Anschluss an eine zur Sinterung führenden Wärmebehandlung eine für einen Gasdurchlass ausreichende Porosität auf und haftet gut am metallischen Substrat 1. Bei der Wärmebehandlung kann die Schicht 7, die auf Grund der Schwindung der einzelnen Schichten 2 bis 4, die auf der gegenüberliegenden Seite des Substrats 1 angeordnet sind, beim Sintern auftretenden mechanischen Spannungen kompensieren.

Die zur Ausbildung der Schicht 7 eingesetzte Paste soll dabei bezüglich der Sinteraktivität und der Schichtdicke Eigenschaften aufweisen, die auch ohne einen bereits vorab gesinterten Elektrolyten 5 zu minimalen Verformungen des Substrats 1 durch die Wärmebehandlung bzw. bei Temperaturwechseln führen.

Die organischen Komponenten, die bei den für den Siebdruck eingesetzten Pasten in diesen enthalten sind, werden bei einer ersten Wärmebehandlung in Wasserstoffatmosphäre, bei der auf maximale Temperaturen im Bereich 1100 °C bis 1250 °C aufgeheizt wird, ausgetrieben und während einer Haltezeit im Bereich 1 h bis 5 h versintern die die Schichten 2 bis 4 und 7 bildenden Bestandteile und es wird eine stoffschlüssige Verbindung der Schichtaufbaus im Cofiring erreicht.

Bei dieser im Cofiring durchgeführten Wärmebehandlung bilden sich die Leitungspfade zwischen den elektrisch leitenden Komponenten (Eisen-Chrom-Legierung, Ni, La_{0,47}Ca_{0,4}Cr_{0,2}Ti_{0,8}O₃) sowie den ionisch leitenden Komponenten (8YSZ, 3YSZ) aus.

Nach dieser ersten Wärmebehandlung wird auf die dem metallischen Substrat 1 abgewandten Seite des Elektrolyten 5 eine Kathodenkontaktschicht 8 aus Ce_{0,8}Gd_{0,2}O₂ durch Siebdrucken mit einer Schichtdicke < 20 µm aufgetragen und getrocknet. Auf diese Schicht 8 wird wieder durch Siebdrucken, die die Kathode 6 bildende Schicht, aus La_{0,6}Sr_{0,4}Fe_{0,8}Co0,2O₃ mit einer Schichtdicke von ≤ 60 µm aufgetragen.

Die zur Sinterung dieser beiden Schichten 6 und 8 führende Wärmebehandlung kann bei der ersten Inbetriebnahme einer Festoxidbrennstoffzelle erfolgen.

Die elektrisch leitende Verbindung einer metallsubstratgetragenen KEA zu einem Interkonnektor (nicht gezeigt) kann mit einer Lötverbindung, die bei Temperaturen ≤ 1000 °C hergestellt wird, erreicht werden.

Es erfolgt eine Verdichtung der Kathodenkontaktschicht auf > 90 % der theoretischen Dichte und es wird eine ausreichend feste Verbindung zur porösen Kathode 6 hergestellt.

## Patentansprüche

1. Verfahren zur Herstellung von Festoxidbrennstoffzellen mit einer metallsubtratgetragenen Kathoden-Elektrolyt-Anoden-Einheit (KEA), bei dem
auf eine Oberfläche eines porösen, metallischen Substrats (1), als Träger der Kathoden-Elektrolyt-Anoden-Einheit, eine die Anode (3) bildende Schicht nasschemisch aufgebracht,
auf diese die Anode (3) bildende Schicht ein bereits vorab gasdicht gesintertes Element, das den Elektrolyten (5) bildet, flächig aufgelegt oder aufgebracht und
bei einer ersten Wärmebehandlung bis zu einer maximalen Temperatur von 1250 °C, die in der die Anode (3) bildenden Schicht enthaltenen organischen Komponenten ausgetrieben, diese Schicht gesintert und dabei eine stoffschlüssige Verbindung zwischen Substrat (1) und Elektrolyt (5) hergestellt und
im Anschluss daran auf den Elektrolyten (5) eine weitere die Kathode (6) bildende Schicht nasschemisch aufgebracht und bei einer weiteren Wärmebehandlung bei Temperaturen unterhalb 1000 °C gesintert und stoffschlüssig mit dem Elektrolyten (5) verbunden wird.

2. Verfahren nach Anspruch 1, **dadurch gekennzeichnet, dass** der nasschemische Auftrag durch Siebdruck, Nasspulverspritzen, Aerosoldruck, Roll-Coating oder Foliengießen erfolgt.

3. Verfahren nach Anspruch 1 oder 2, **dadurch gekennzeichnet, dass** bei einer Nickel enthaltenden Anode (3) zwischen dem Substrat (1) und der die Anode (3) bildenden Schicht eine eine Diffusion vermeidende Zwischenschicht (2) nasschemisch aufgebracht und der ersten Wärmebehandlung unterzogen wird.

4. Verfahren nach einem der vorhergehenden Ansprüche, **dadurch gekennzeichnet, dass** die Zwischenschicht (2), die die Anode (3) bildende Schicht und die die Kathode (6) bildende Schicht jeweils mit einer Schichtdicke ≤ 60 µm aufgetragen werden, ein gesinterter plattenförmiger Elektrolyt (5) mit einer Dicke ≤ 50 µm und einer Dichte > 98 % der theoretischen Dichte und ein gesintertes metallisches Substrat (1) einer Eisen-Chrom-Legierung mit mindestens 15 Masse-% Chrom, einer Porosität von mindestens 30 % und einer Schichtdicke > 200 µm bis maximal 1 mm eingesetzt werden.

5. Verfahren nach einem der vorhergehenden Ansprüche, **dadurch gekennzeichnet, dass** zwischen der die Anode (3) bildenden Schicht und dem Elektrolyten (5) eine Anodenkontaktschicht (4), die aus dem Anodenwerkstoff, mit einem höheren darin enthaltenen Anteil an sinteraktivem pulverförmigem Elektrolytwerkstoff, mit der Zusammensetzung Zr₁₋ₓMeₓO_{2-δ}, gebildet ist, nasschemisch aufgebracht und der ersten Wärmebehandlung unterzogen wird.

6. Verfahren nach einem der vorhergehenden Ansprüche, **dadurch gekennzeichnet, dass** die die Anode (3) bildende Schicht aus
Ni/Ce_{1-x-y}MeₓMa_{y}O_{2-δ}, Ni/Zr₁₋ₓMeₓO_{2-δ} Cermet mit Me als Seltenerdmetall und Ma als katalytisch wirksamem Metall oder einer Mischung bestehend aus Ce_{1-x-y}MeₓMa_{y}O_{2-δ} und (La, Ca)(Ti,Cr,Ru)O₃ und/oder TiC oder (Y,Sr)TiO₃ und
der Elektrolyt (5) aus Zr₁₋ₓMeₓO_{2-δ}, das mit Scandium, Yttrium oder Scandium/Ceria stabilisiert ist, und
die Kathode (6) aus La_{0,6}Sr_{0,4}Fe_{0,8}Co_{0,2}O_{3-δ} gebildet werden.

7. Verfahren nach einem der vorhergehenden Ansprüche, **dadurch gekennzeichnet, dass** zwischen Elektrolyt (5) und der die Kathode (6) bildenden Schicht eine CeO₂ enthaltende Zwischenschicht ebenfalls nasschemisch aufgebracht und der ersten Wärmebehandlung unterzogen wird.

8. Verfahren nach einem der vorhergehenden Ansprüche, **dadurch gekennzeichnet, dass** ein Elektrolyt (5) eingesetzt wird, der für ein Oxidationsmittel und einen Brennstoff bei Betriebstemperatur der Festoxidbrennstoffzelle vollständig gasdicht ist.

9. Verfahren nach einem der vorhergehenden Ansprüche, **dadurch gekennzeichnet, dass** ein plattenförmiges gasdicht gesintertes Element, das den Elektrolyten (5) bildet, und ein planares metallisches Substrat (1) eingesetzt werden.

10. Verwendung einer metallsubstratgetragenen Kathoden-Elektrolyt-Anoden-Einheit hergestellt nach einem Verfahren der vorhergehenden Ansprüche für die Festoxid-Elektrolyse oder als Sensor, insbesondere als Sauerstoffsensor.

11. Metallsubstratgetragene Kathoden-Elektrolyt-Anoden-Einheit hergestellt nach einem Verfahren der vorhergehenden Ansprüche 1 bis 9.

## Claims

1. A method for producing solid oxide fuel cells having a cathode-electrolyte-anode (CEA) unit supported by a metal substrate, wherein
a layer forming the anode (3) is wet-chemically applied to a surface of a porous, metallic substrate (1) as the support of the cathode-electrolyte-anode unit,
an element that has already been sintered gas-tight in advance, which forms the electrolyte (5), is placed or applied in a planar manner on to said layer forming the anode (3), and
in a first thermal treatment up to a maximum temperature of 1250°C, the organic components contained in the layer forming the anode (3) are driven off, said layer is sintered and a material bond is thereby created between the substrate (1) and the electrolyte (5), and
subsequent to this, a further layer forming the cathode (6) is wet-chemically applied to the electrolyte (5) and, in a further thermal treatment at temperatures below 1000°C, is sintered and joined to the electrolyte (5) in a material bond.

2. The method according to claim 1, **characterised in that** the wet-chemical application takes place by screen printing, wet powder spraying, aerosol jet printing, roll coating or film casting.

3. The method according to claim 1 or 2, **characterised in that** in the case of an anode (3) containing nickel an intermediate layer (2) avoiding diffusion is wet-chemically applied between the substrate (1) and the layer forming the anode (3) and is subjected to the first thermal treatment.

4. The method according to one of the preceding claims, **characterised in that** the intermediate layer (2), the layer forming the anode (3) and the layer forming the cathode (6) are each applied with a layer thickness ≤ 60 µm, a sintered, plate-like electrolyte (5) having a thickness
≤ 50 µm and a density > 98% of the theoretical density and a sintered metallic substrate (1) of an iron-chromium alloy having at least 15 wt.% chromium, a porosity of at least 30% and a layer thickness > 200 µm up to a maximum of 1 mm are used.

5. The method according to one of the preceding claims, **characterised in that** an anode contact layer (4) which is formed from the anode material with a higher proportion of sinter-active powdered electrolyte material contained therein, having the composition Zr₁₋ₓMeₓO_{2-δ}, is applied wet-chemically between the layer forming the anode (3) and the electrolyte (5) and is subjected to the first thermal treatment.

6. The method according to one of the preceding claims, **characterised in that** the layer forming the anode (3) is formed from
Ni/Ce_{1-x-y}MeₓMa_{y}O_{2-δ}, Ni/Zr₁₋ₓMeₓO_{2-δ} cermet with Me as a rare earth metal and Ma as a catalytically active metal or from a mixture consisting of Ce_{1-x-y}MeₓMa_{y}O_{2-δ} and (La, Ca)(Ti, Cr, Ru)O₃ and/or TiC or (Y, Sr)TiO₃ and
the electrolyte (5) is formed from Zr₁₋ₓMeₓO_{2-δ} which is stabilised by scandium, yttrium or scandium/ceria, and
the cathode (6) is formed from La_{0.6}Sr_{0.4}Fe_{0.8}Co_{0.2}O_{3-δ}.

7. The method according to one of the preceding claims, **characterised in that** an intermediate layer containing CeO₂ is likewise wet-chemically applied between the electrolyte (5) and the layer forming the cathode (6) and is subjected to the first thermal treatment.

8. The method according to one of the preceding claims, **characterised in that** an electrolyte (5) is used which is completely gas tight for an oxidant and a fuel at the operating temperature of the solid oxide fuel cell.

9. The method according to one of the preceding claims, **characterised in that** a gas-tight sintered plate-like element which forms the electrolyte (5) and a planar metallic substrate (1) are used.

10. Use of a cathode-electrolyte-anode unit supported by a metal substrate produced by a method of the preceding claims for solid oxide electrolysis or as a sensor, in particular as an oxygen sensor.

11. A cathode-electrolyte-anode unit supported by a metal substrate produced by a method of the preceding claims 1 to 9.

## Revendications

1. Procédé de fabrication de piles à combustible à oxydes solides, comportant une unité cathode-électrolyte-anode (CEA) portée par un substrat métallique, dans lequel
sur une surface d'un substrat métallique poreux (1), on applique par voie chimique humide en tant que support de l'unité cathode-électrolyte-anode une couche formant l'anode (3),
sur cette couche formant l'anode (3), on dépose ou on applique en nappe un élément déjà fritté au préalable d'une manière étanche aux gaz, qui forme l'électrolyte (5), et
dans le cadre d'un premier traitement thermique pouvant atteindre jusqu'à une température maximale de 1250°C, on expulse les composants organiques contenus dans la couche formant l'anode (3), on fritte cette couche, et on fabrique alors un assemblage par liaison de matière entre le substrat (1) et l'électrolyte (5), et
ensuite, on applique par voie chimique humide sur l'électrolyte (5) une autre couche formant la cathode (6) et, dans le cadre d'un autre traitement thermique à des températures inférieures à 1000°C, on la fritte, et on l'assemble par liaison de matière à l'électrolyte (5).

2. Procédé selon la revendication 1, **caractérisé en ce que** l'application par voie chimique humide s'effectue par sérigraphie, pulvérisation de poudre par voie humide, impression par aérosol, revêtement au rouleau ou coulée de feuille.

3. Procédé selon la revendication 1 ou 2, **caractérisé en ce que**, dans le cas d'une anode (3) contenant du nickel, on applique par voie chimique humide entre le substrat (1) et la couche formant l'anode (3) une couche intermédiaire (2) empêchant la diffusion, et on la soumet au premier traitement thermique.

4. Procédé selon l'une des revendications précédentes, **caractérisé en ce que** la couche intermédiaire (2), la couche formant l'anode (3) et la couche formant la cathode (6) sont chacune appliquée sur une épaisseur de couche ≤ 60 µm, et on utilise un électrolyte lamellaire fritté (5) ayant une épaisseur ≤ 50 µm et une densité > 98 % de la densité théorique, et un substrat métallique fritté (1) d'un alliage fer-chrome contenant au moins 15 % en masse de chrome, ayant une porosité d'au moins 30 % et une épaisseur de couche > 200 µm et allant jusqu'à un maximum de 1 mm.

5. Procédé selon l'une des revendications précédentes, **caractérisé en ce qu'**entre la couche formant l'anode (3) et l'électrolyte (5), une couche de contact anodique (4), qui est formée à partir du matériau d'anode, comprenant une proportion plus élevée d'un matériau d'électrolyte pulvérulent à activité de frittage, ayant la composition Zr₁₋ₓMeₓO_{2-δ}, est appliquée par voie chimique humide, et est soumise au premier traitement thermique.

6. Procédé selon l'une des revendications précédentes, **caractérisé en ce que** la couche formant l'anode (3) est constituée d'un cermet Ni/Ce_{1-x-y}MeₓMa_{y}O_{2-δ}, Ni/Zr_{1-2-δ}, dans lequel Me est un métal des terres rares et Ma est un métal catalytiquement actif, ou d'un mélange constitué de Ce_{1-x-y}MeₓMa_{y}O_{2-δ} et de (La,Ca)(Ti,Cr,Ru)O₃ et/ou de TiC ou de (Y,Sr)TiO₃, et
l'électrolyte (5) est constitué de Zr₁₋ₓMeₓO_{2-δ}, qui est stabilisé au scandium, à l'yttrium ou au scandium/oxyde de cérium, et
la cathode (6) est constituée de La_{0,6}Sr_{0,4}Fe_{0,8}Co_{0,2}O_{3-δ}.

7. Procédé selon l'une des revendications précédentes, **caractérisé en ce qu'**entre l'électrolyte (5) et la couche formant la cathode (6), une couche intermédiaire contenant du CeO₂ est elle aussi appliquée par voie chimique humide et est soumise au premier traitement thermique.

8. Procédé selon l'une des revendications précédentes, **caractérisé en ce qu'**on utilise un électrolyte (5) qui est entièrement étanche aux gaz pour un oxydant et un combustible, à la température de service de la pile à combustible à oxydes solides.

9. Procédé selon l'une des revendications précédentes, **caractérisé en ce qu'**on utilise un élément fritté lamellaire étanche aux gaz, qui forme l'électrolyte (5), et un substrat métallique planaire (1).

10. Utilisation d'une unité cathode-électrolyte-anode portée par un substrat métallique, fabriquée par un procédé selon les revendications précédentes, pour l'électrolyse d'oxydes solides, ou en tant que capteur, en particulier en tant que capteur d'oxygène.

11. Unité cathode-électrolyte-anode portée par un substrat métallique, fabriquée par un procédé selon les revendications 1 à 9.
